# EUROPEAN PATENT SPECIFICATION

(11) **EP 3 893 436 B1**
(45) Date of publication and mention of the grant of the patent: **01.05.2024**
(21) Application number: 19893820.1
(22) Date of filing: 07.11.2019
(51) Int. Cl.: H04L 67/12, H04L 67/565, H04L 69/08, H04L 41/0246, H04L 41/0226

(54) **COAP-BASED OPC UA MESSAGE TRANSMISSION METHOD, AND SERVER**
COAP-BASIERTES OPC-UA-NACHRICHTENÜBERTRAGUNGSVERFAHREN UND SERVER
PROCÉDÉ DE TRANSMISSION DE MESSAGE OPC UA À BASE DE COAP, ET SERVEUR

(30) Priority: 04.12.2018 CN 201811476189
(43) Date of publication of application: 13.10.2021
(73) Proprietor: CHONGQING UNIVERSITY OF POSTS AND TELECOMMUNICATIONS, Chongqing 400065 (CN)
(72) Inventor: PU, Chenggen, Chongqing 400065 (CN); WANG, Yi, Chongqing 400065 (CN); WANG, Ping, Chongqing 400065 (CN); WU, Junrui, Chongqing 400065 (CN)
(74) Representative: advotec.
(86) International application number: PCT/CN2019/116134
(87) International publication number: WO 2020/114186

(56) References cited:
- WANG C PU H WANG Y YANG L SHAO C HONGQING UNIVERSITY OF POSTS AND TELECOMMUNICATIONS J HOU HUAWEI TECHNOLOGIES P: "OPC UA Message Transmission Method over CoAP; draft-wang-core-opcua-transmission-02.txt" , OPC UA MESSAGE TRANSMISSION METHOD OVER COAP; DRAFT-WANG-CORE-OPCUA-TRANSMISSION-02.TXT; INTERNET-DRAFT: CORE, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 7 September 2017 (2017-09-07), pages 1-12, XP015121682, [retrieved on 2017-09-07]
- WANG C PU P WANG Y YANG D XIONG CHONGQING UNIVERSITY OF POSTS AND TELECOMMUNICATIONS H: "Requirements Analysis for OPC UA over CoAP; draft-wang-core-opcua-transmition-requirem ents-03.txt", REQUIREMENTS ANALYSIS FOR OPC UA OVER COAP; DRAFT-WANG-CORE-OPCUA-TRANSMITION-REQUIREM ENTS-03.TXT; INTERNET-DRAFT: CORE, INTERNET ENGINEERING TASK FORCE, IETF; STANDARDWORKINGDRAFT, INTERNET SOCIETY (ISOC) 4, RUE DES FALAISES CH- 1205 GENEVA, SWITZER, no. 3, 15 July 2018 (2018-07-15), pages 1-9, XP015127692, [retrieved on 2018-07-15]

## Description

### CROSS REFERENCE OF RELATED APPLICATION

### FIELD

The present disclosure relates to the technical field of industrial communication, and particularly, to a method for transmitting an OPC UA message based on CoAP.

### BACKGROUND

Constrained Application Protocol (CoAP) is a Web transmission protocol specifically for a resource-constrained node and network in Internet of Things proposed by Internet Engineering Task Force (IETF) in 2014. Its appearance provides a solution with low power consumption, high security, and scalability for a network containing the resource-constrained node.

OPC Unified Architecture (OPC UA) is a key technology released by OPC Foundation in 2006 to solve the problem of data interconnection in a multi-protocol network. In addition to seamless data transmission, OPC UA also has characteristics of building an information model, and secure and platform-independent communication. OPC UA provides a common technology and semantic operation layer for machine-to-machine (M2M) communication, which plays a vital role in realizing interconnection of industrial Internet.

According to the document "OPC UA Message Transmission Method over CoAP; draft-wang-core-opcua-transmission-02.txt", OPC UA MESSAGE TRANSMISSION METHOD OVER COAP; DRAFT- WANG-CORE-OPCUA-TRANSMISSION-02.TXT; INTERNET-DRAFT: CORE, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 7 September 2017, pages 1 -12, XP015121682, it is provides some transmission methods for message of OPC UA over CoAP.

At present, data of a resource-constrained industrial field device cannot be uniformly described and cannot be uniformly accessed.

### SUMMARY

A method for transmitting an OPC UA message based on CoAP is provided in the present disclosure, which can meet a need of a resource-constrained industrial field device to access a Web service, to realize seamless connection of an industrial field network from top (such as cloud, enterprise resource planning (ERP), and manufacturing execution system (MES)) to down (such as a gateway, and an underlying field device).

To achieve the above objectives, the present disclosure provides the following technical solutions.

The invention is related to a method according to claim 1. Further embodiments of the invention are defined by the dependent claims .

In a first aspect, a method for transmitting an OPC UA message based on CoAP is provided in the present disclosure, which including: an OPC UA server using CoAP (hereinafter "UA-CoAP server") obtains data from an data acquisition terminal of a resource-constrained industrial field device, encapsulates the data using an OPC unified architecture (OPC UA) information model, encodes the encapsulated data in binary format or extensive markup language (XML) format, and encapsulates the entire OPC UA data message into a payload of a CoAP message, i.e., an UA-CoAP data message, then the UA-CoAP server queries whether there is a proxy server (hereinafter "CoAP-to-HTTP proxy server", which is usually installed on a boundary gateway or boundary router) that converts hypertext transfer protocol (HTTP) into the CoAP in a network. If the CoAP-to-HTTP proxy server exists, the UA-CoAP server sends the UA-CoAP data message to the CoAP-to-HTTP proxy server located at a network boundary (which is usually the boundary gateway or boundary router) of an underlying industrial field device; if there is no CoAP-to-HTTP proxy server, the UA-CoAP server discards the UA-CoAP data message, and perform direct transmission in a manner of transmission control protocol (TCP).

Optionally, in combination with the above first aspect, in a first possible implementation manner, the process that the UA-CoAP server encapsulates the collected original data using the OPC UA information model, encodes the encapsulated data in a binary format or XML format, and encapsulates the OPC UA data message into the payload of the CoAP message includes: the UA-CoAP server reconstructs a header in constructing the UA-CoAP data message, the main content contained in the header is a type of message function, an unique message identifier (ID) for repeated check and error check, an encoding type of OPC UA information, an option of additional CoAP function, and length of data message.

Optionally, in combination with the above first aspect, in a second possible implementation manner, the process that the UA-CoAP server queries whether there is the CoAP-to-HTTP proxy server in the network includes: sending a request frame to query whether the border gateway or border router has a function of proxy conversion, and determining that the CoAP-to-HTTP proxy server exists if a corresponding acknowledgement frame is received; and determining that the CoAP-to-HTTP proxy server does not exist if no acknowledgement frame is received within a limited period of time.

Optionally, in combination with the second possible implementation manner of the above first aspect, in a third possible implementation manner, the method further includes: when the UA-CoAP server sends the query request frame to the border gateway or border router, the proxy server replies the acknowledgement frame to the UA-CoAP server if the CoAP-to-HTTP proxy server exists, and the UA-CoAP server discards the constructed UA-CoAP data message and transmits the data message in a manner of OPC UA-TCP if no acknowledgement frame is received after sending query request frame multiple times within the limited period of time.

In view of the problem that data of the resource-constrained industrial field device cannot be uniformly described and cannot be uniformly accessed, and to meet the need of the resource-constrained industrial field device to access the Web service, the present disclosure designs the method for transmitting the OPC UA message based on CoAP which is suitable for the underlying device. REST architecture of the CoAP can realize a function that the underlying device to access the Web service, while the OPC UA can perform uniform modeling on data in multiple protocol formats at an underlying layer. The combination of the REST architecture of the CoAP and the OPC UA can ensure interconnection and lightweight communication of the data of the underlying device to a certain extent.

### BRIEF DESCRIPTION OF THE DRAWINGS

Figure 1 is a schematic view of a communication protocol stack adopted in the present disclosure;
Figure 2 is a structural chart of an UA-CoAP server provided in the present disclosure;
Figure 3 is a schematic view of a header of a UA-CoAP data message provided in the present disclosure;
Figure 4 is a connection diagram of communication when there is a proxy conversion service provided in the present disclosure;
Figure 5 is a flow chart of a method for transmitting an OPC UA message based on CoAP provided in the present disclosure;
Figure 6 is a structural chart of a communication device provided in the present disclosure; and
Figure 7 is a structural chart of a communication device provided in the present disclosure.

### DETAILED DESCRIPTION

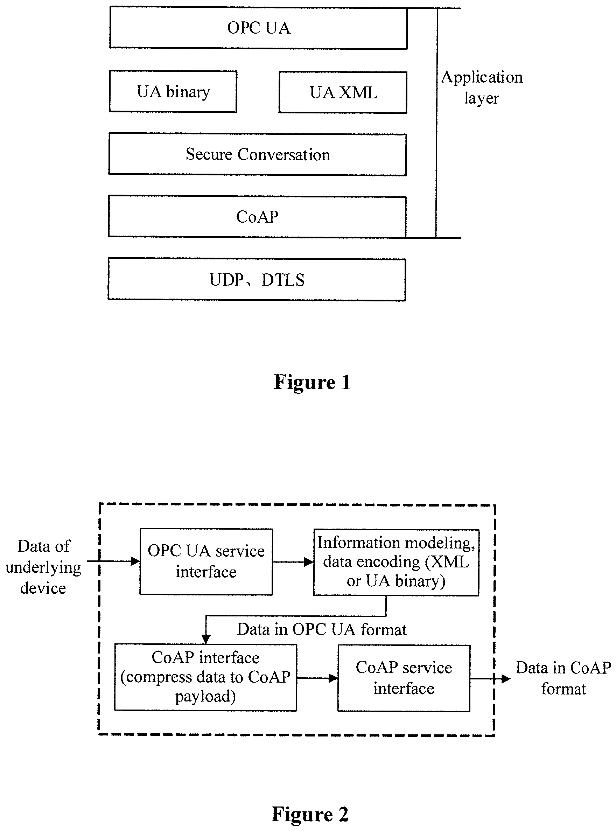

Figure 1 is a communication protocol stack designed by a preferred embodiment of the present disclosure. The communication protocol stack mainly includes: OPC UA, a secure channel, and an application layer protocol family constituted by CoAP. OPC UA may adopt UA binary or XML encoding format for encoding according to application scenarios.

Figure 2 is a UA-CoAP server designed by a preferred embodiment of the present disclosure. A main function of the UA-CoAP server is: receiving underlying data and constructing an OPC UA information model, encoding the constructed data and encapsulating the encoded data into a payload of a standard CoAP data message, and sending a query request frame to query whether there is a proxy conversion server.

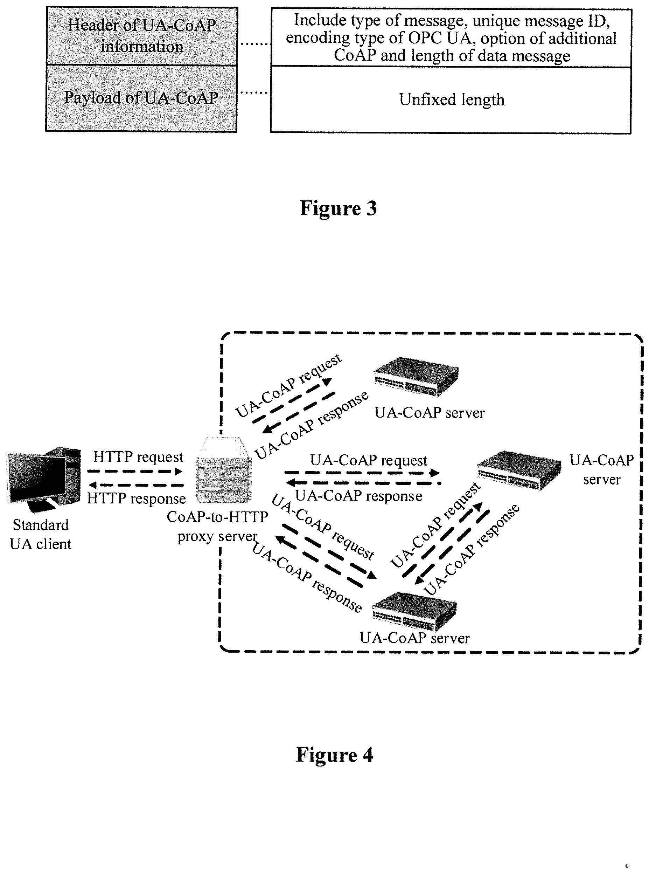

Figure 3 is a header of a UA-CoAP data message designed by a preferred embodiment of the present disclosure. Main content of the header of the UA-CoAP data message includes: IP protocol version, a type of message function, the unique message ID for repeated check and error check, an encoding type of OPC UA information, option of additional CoAP function and length of the data message.

Figure 4 is a communication mode when there is a proxy conversion service designed by a preferred embodiment of the present disclosure. Main content of the communication mode includes that: the redesigned UA-CoAP server transmits data to a CoAP-to-HTTP proxy server at a network boundary, a converted HTTP data message can be communicated with a standard OPC UA client directly. An advantage of this communication mode is to better support a Web service, and the original UA client does not need to be changed.

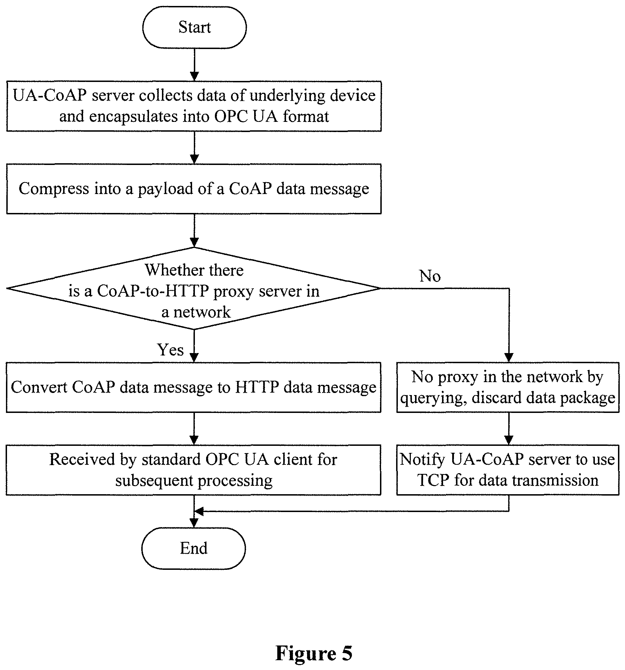

Figure 5 is a process of a method for transmitting an OPC UA message based on CoAP in a preferred embodiment of the present disclosure. The transmission method is mainly carried out on the server, the client and the proxy conversion server. As illustrated in Figure 5, a specific implementation process is described in Steps 1-5 below.

In Step 1, the UA-CoAP server collects data of an underlying device, encodes the collected data in a binary format or XML format, and encapsulates the data in OPC UA format.

In Step 2, in the UA-CoAP server, the data in OPC UA format is encapsulated into the payload of the CoAP data message. Meanwhile, the header of the UA-CoAP data message is reconstructed, encoding format information of the OPC UA data in the payload is added, and a unique number is given to ensure a correct data transmission sequence.

In Step 3, the UA-CoAP server queries whether there is a CoAP-to-HTTP proxy conversion server in a network, proceeds to a next step if the CoAP-to-HTTP proxy conversion server exists, and discards the UA-CoAP data packet and transmit the OPC UA information in a manner of TCP if the CoAP-to-HTTP proxy conversion server does not exist.

In Step 4, if the HTTP-CoAP proxy conversion server exists in the network, the UA-CoAP server sends the UA-CoAP data message to the proxy server for format conversion, to convert the UA-CoAP data message into the standard HTTP data message.

In Step 5, since OPC UA protocol itself supports a transmission mode of HTTP, a standard OPC UA client can be used to receive the converted UA-CoAP data message. After that, the client extracts data modeling information and a data value in the message for further data processing.

It is understandable that, in order to realize the aforementioned functions, the aforementioned UA-CoAP server and CoAP-to-HTTP proxy conversion server include hardware structures and/or software modules corresponding to each function. In the following, a first server is used to represent the UA-CoAP server, and a second server is used to represent the CoAP-to-HTTP proxy conversion server. Those skilled in the art should easily realize that in combination with modules and algorithm steps of the examples described in the embodiments disclosed herein, the present disclosure can be implemented in a form of hardware or a combination of hardware and software. Whether a certain function is executed by hardware or software-driven hardware depends on a specific application and design constraint conditions of the technical solutions. Professionals can use different methods for each specific application to implement the described functions, but such implementation should not be considered beyond the scope of the present disclosure.

Described in terms of hardware structure, the first server may be implemented by one physical device, or may be implemented by multiple physical devices together, or may be a logical function module in one physical device, and the second server may be implemented by one physical device, or may be implemented by multiple physical devices, or may be a logical function module in one physical device, which are not specifically limited in the embodiments of the present disclosure.

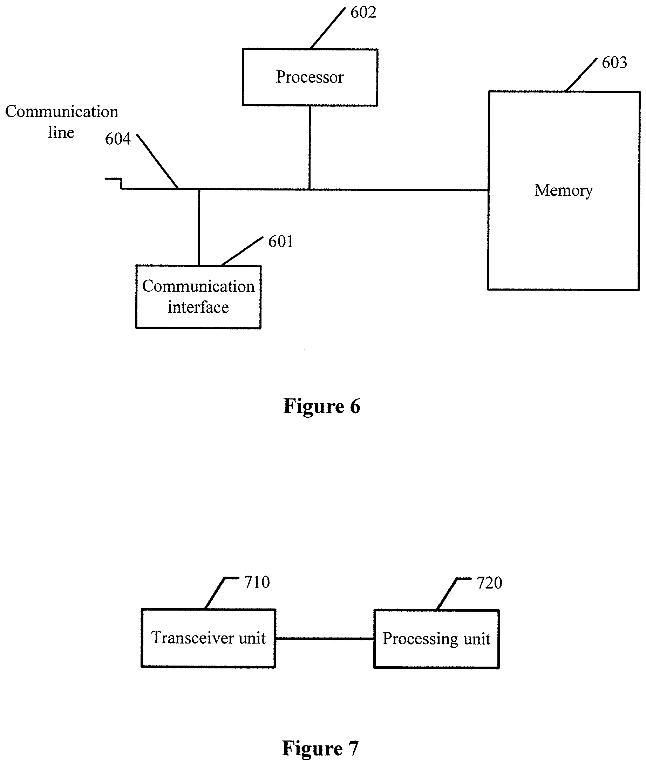

For example, the first server or the second server may be implemented by a communication device in Figure 6. Figure 6 illustrates a schematic diagram of a hardware structure of a communication device provided by an embodiment of the present disclosure. The communication device includes: a communication interface 601 and a processor 602, and may also include a memory 603.

The communication interface 601 may be any device such as a transceiver, and is configured to communicate with other device or communication network, such as Ethernet, radio access network (RAN), and wireless local area networks (WLAN).

The processor 602 includes but is not limited to one or more of a central processing unit (CPU), a network processor (NP), an application-specific integrated circuit (ASIC) and a programmable logic device (PLD). The above-mentioned PLD may be a complex programmable logic device (CPLD), a field-programmable gate array (FPGA), a generic array logic (GAL) or any combination thereof. The processor 602 is responsible for a communication line 604 and general processing, and may also provide various functions, including timing, peripheral interfaces, voltage regulation, power management, and other control functions. The memory 603 may be used to store data used by the processor 602 when performing operations.

The memory 603 may be a read-only memory (ROM) or other type of static storage devices that can store static information and instructions, random access memory (RAM), or other type of dynamic storage devices that can store information and instructions, or may also be electrically erasable programmable read-only memory (EEPROM), compact disc read-only memory (CD-ROM) or other optical disk storage, CD storage (including compressed CD, laser disk, CD, digital versatile CD, and Blu-ray CD), magnetic disk storage medium or other magnetic storage device, or any other medium that can be used to carry or store desired program codes in a form of instructions or data structures and can be accessed by a device, but are not limited to these. The memory may exist independently and connected to the processor 602 through the communication line 604. The memory 603 may also be integrated with the processor 602. If the memory 603 and the processor 602 are independent devices, the memory 603 and the processor 602 are connected, for example, the memory 603 and the processor 602 can communicate through the communication line. The communication interface 601 and the processor 602 may communicate through the communication line, and the communication interface 601 may also be directly connected to the processor 602.

The communication line 604 may include any number of interconnected buses and bridges, and the communication line 604 links various circuits including one or more processors 602 represented by the processor 602 and a memory represented by the memory 603 together. The communication line 604 may also link various other circuits such as a peripheral device, a voltage regulator, and a power management circuit together, which are all known in the art, and therefore, no further description thereof is provided in this application.

When the communication device is the first server, in a specific implementation, the first server may include: a memory, a processor, and a communication interface.

The memory is configured to store readable instructions.

The processor is coupled with the memory, and is configured to execute the readable instructions in the memory to perform following operations:
encapsulating collected original data using an OPC UA information model, encoding the encapsulated data in a binary format or extensive markup language (XML) format , and encapsulating an OPC UA data message into a payload of a constrained application protocol (CoAP) message, the first server being an OPC UA server based on CoAP; and
querying whether there is a second server in a network, the second server being a proxy server that converts the CoAP into hypertext transfer protocol (HTTP).

The communication interface is coupled to the processor, and is configured to, if the second proxy server exists, send a UA-CoAP data message to the second proxy server located at a network boundary of an underlying industrial field device, to cause the second proxy server, after receiving the data message, to convert the CoAP into the HTTP with OPC UA information being unchanged, and to form after the conversion an HTTP data message containing the original OPC UA information, and directly send the data message to a standard OPC UA client in an external network for subsequent data analysis; and if there is no second proxy server, the process discards the UA-CoAP data message, and performs direct transmission using transmission control protocol (TCP).

In a specific embodiment, the processor is specifically configured to: reconstruct a header in constructing the data message, the header comprising a type of message function, an encoding type of OPC UA information, an option of additional CoAP function, and length of the data message.

In a specific embodiment, the communication interface is specifically configured to send a request frame to query whether a border gateway or border router has a function of proxy conversion, and the processor is configured to determine that the second server exists if a corresponding acknowledgement frame is received, and determine that the second server does not exist if no acknowledgement frame is received by the communication interface within a limited period of time.

In a specific embodiment, the processor is specifically configured to, if no acknowledgement frame is received by the communication interface within the limited period of time, discard the constructed UA-CoAP data message, and transmit the date message in a manner of OPC UA-TCP.

When the communication device is the second server, in a specific implementation, the second server may include: a communication interface, a memory, and a processor.

The communication interface is configured to send and receive data messages.

The memory is configured to store readable instructions.

The processor is coupled with the memory, and is configured to execute the readable instructions in the memory to perform following operations:
converting, after the communication interface receives the data message, constrained application protocol (CoAP) into hypertext transfer protocol (HTTP) with OPC UA information being unchanged, the data message being obtained by encapsulating by a first server collected original data using an OPC UA information model, encoding the encapsulated data in a binary format or XML format and encapsulating an OPC UA data message into a payload of a CoAP message, the second server being a proxy server that converts the CoAP into HTTP, and the first server being an OPC UA server based on CoAP; and
forming, after conversion is performed by the processor, an HTTP data message containing the original OPC UA information, and the communication interface is further configured to directly send the data message to a standard OPC UA client in an external network for subsequent data analysis.

In a specific implementation, the communication interface is further configured to, if receiving a query request frame sent by the first server, reply an acknowledgement frame to the first server, so that the first server discards the constructed UA-CoAP data message and transmits the data message in a manner of OPC UA-TCP if the first server fails to get a reply of the acknowledgement frame after sending the query request frame within a limited period of time.

In a specific implementation, the second proxy server runs on a border gateway or a border router, and supports a function of converting between standard CoAP data and a standard HTTP data message.

In the embodiments of the present disclosure, the communication interface may be regarded as a transceiver unit of a node, the processor with processing function may be regarded as a processing unit of the node, and the memory may be regarded as a storage unit of the node. As illustrated in Figure 7, the foregoing first server may include a transceiver unit 710 and a processing unit 720, and the second server may also include a transceiver unit 710 and a processing unit 720. The transceiver unit may also be referred to as a transceiver, a transceiver set, or a transceiver device. The processing unit may also be called a processor, a processing board, a processing module, or a processing device. Optionally, a device for implementing a receiving function in the transceiver unit 710 may be regarded as a receiving unit, and a device for implementing a sending function in the transceiver unit 710 may be regarded as a sending unit, that is, the transceiver unit 710 includes a receiving unit and a sending unit. The transceiver unit may sometimes be called a transceiver set, a transceiver, or a transceiver circuit. The receiving unit may sometimes be called a receiving set, a receiver, or a receiving circuit. The sending unit may sometimes be called a transmitting set, a transmitter, or a transmitting circuit.

The foregoing embodiments may be implemented in whole or in part by software, hardware, firmware, or any combination thereof. When implemented by software, they can be implemented in the form of a program product in whole or in part.

The program product includes one or more instructions. When the program instructions are loaded and executed on an electronic device, processes or functions described in the embodiments of the present disclosure are generated in whole or in part. The electronic device may be a general-purpose computer, a special-purpose computer, a sensor node, or other device that can recognize program instructions. The instructions may be stored in a readable storage medium, or transmitted from one readable storage medium to another readable storage medium. For example, the instructions may be transmitted from a website, computer, sensor, server, or data center through a wired mode (for example, coaxial cable, optical fiber, or digital subscriber line (DSL)) or a wireless mode (such as infrared, wireless, or microwave) to another website site, computer, sensor, server or data center. The readable storage medium may be any available medium that can be stored by the electronic device or a data storage device such as a server or data center integrated with one or more available media. The available medium may be a magnetic medium (for example, a floppy disk, a hard disk, and a magnetic tape), an optical medium (for example, a DVD), or a semiconductor medium (for example, a solid state disk (SSD)).

Those of ordinary skill in the art can understand that all or part of the steps in the various methods of the above-mentioned embodiments can be completed by instructing relevant hardware through a program. The program can be stored in a storage medium. The storage medium may include: ROM, RAM, Disk or CD.

## Claims

1. A method for transmitting an OPC United Architecture UA message over Constrained Application Protocol CoAP, comprising encapsulating, by a first server, data using an OPC UA information model, encoding the encapsulated data in a binary format or extensive markup language, XML, format to obtain an OPC UA data message, and encapsulating the OPC UA data message into a payload of a CoAP message to obtain an UA-CoAP data message, the first server being an OPC UA server based on CoAP;
the method is **characterized in**:
querying, by the first server, whether there is a second proxy server in a network;
if the second proxy server exists, sending, by the first server, the UA-CoAP data message to the second proxy server located at a network boundary of an underlying industrial field device;
converting, by the second proxy server after receiving the UA-CoAP data message, CoAP into hypertext transfer protocol, HTTP, with OPC UA information being unchanged, the second server being a proxy server that converts the CoAP into the HTTP;
forming, by the second proxy server after the conversion, an HTTP data message containing the original OPC UA information, and directly sending the data message to a standard OPC UA client in an external network for subsequent data analysis; and
if there is no second proxy server, discarding, by the first server, the UA-CoAP data message, and performing direct transmission using transmission control protocol, TCP.

2. The method according to claim 1, wherein, encapsulating, by the first server, the data using the OPC UA information model, encoding the encapsulated data in a binary format or an XML format, and encapsulating the OPC UA data message into the payload of the CoAP message comprises:
reconstructing, by the first server, a header in constructing the data message, the header comprising a type of message function, an encoding type of OPC UA information, an option of additional CoAP function, and length of data message.

3. The method according to claim 1, wherein, querying, by the first server, whether there is a second server in the network, the second server being a proxy server that converts the CoAP into HTTP comprises:
sending a request frame to query whether a border gateway or a border router has a function of proxy conversion, and determining that the second server exists if a corresponding acknowledgement frame is received; and
determining that the second server does not exist if no acknowledgement frame is received within a limited period of time.

4. The method according to claim 3, wherein, if no acknowledgement frame is received within the limited period of time, the method further comprises:
discarding, by the first server, the constructed UA-CoAP data message, and transmitting the date message in a manner of UA-TCP.

5. The method according to claim 1, wherein, the method further comprises:
if the second server receives a query request frame sent by the first server, replying, by the second server, an acknowledgement frame to the first server, so that the first server discards the constructed UA-CoAP data message and transmits the data message in a manner of UA-TCP if the first server fails to get a reply of the acknowledgement frame after sending the query request frame multiple times within a limited period of time.

6. The method according to claim 1, wherein,
the second proxy server runs on a border gateway or a border router, and supports a function of converting between a standard CoAP data message and a standard HTTP data message.

## Patentansprüche

1. Verfahren zur Übertragung einer OPC-UA-Nachricht mittels CoAP, umfassend:
Kapseln von Daten mittels eines OPC-UA-Informationsmodells durch einen ersten Server, Codieren der gekapselten Daten in einem binären Format oder im XML-Format, um eine OPC-UA-Datennachricht zu erhalten, und Kapseln der OPC-UA-Datennachricht in Nutzdaten einer CoAP-Nachricht, um eine UA-CoAP-Datennachricht zu erhalten, wobei der erste Server ein CoAP-basierter OPC-UA-Server ist;
**gekennzeichnet durch**:
Abfragen, ob es in einem Netzwerk einen zweiten Proxy-Server gibt, durch den ersten Server;
wenn es den zweiten Proxy-Server gibt, Senden der UA-CoAP-Datennachricht an den zweiten Proxy-Server, der sich an einer Netzwerkgrenze eines zugrundeliegenden industriellen Feldgeräts befindet, durch den ersten Server;
nach dem Empfang der UA-CoAP-Datennachricht Konvertieren von CoAP in HTTP durch den zweiten Proxy-Server, wobei OPC-UA-Informationen unverändert bleiben, wobei der zweite Server ein Proxy-Server ist, der CoAP in HTTP konvertiert;
nach der Konvertierung Ausbilden einer die originalen OPC-UA-Informationen enthaltenden HTTP-Datennachricht durch den zweiten Proxy-Server und direktes Senden der Datennachricht an einen standardmäßigen OPC-UA-Client in einem externen Netzwerk zur anschließenden Datenanalyse; und
wenn es keinen zweiten Proxy-Server gibt, Verwerfen der UA-CoAP-Datennachricht durch den ersten Server und Ausführen einer direkten Übertragung mittels TCP.

2. Verfahren nach Anspruch 1, wobei das Kapseln der Daten mittels des OPC-UA-Informationsmodells durch den ersten Server, das Codieren der gekapselten Daten in einem binären Format oder im XML-Format und das Kapseln der OPC UA-Datennachricht in die Nutzdaten der CoAP-Nachricht Folgendes umfasst:
Rekonstruieren eines Headers beim Erstellen der Datennachricht durch den ersten Server, wobei der Header eine Nachrichtentypfunktion, OPC-UA-Codierungstypinformationen, eine Zusatz-CoAP-Optionsfunktion und eine Datennachrichtlänge umfasst.

3. Verfahren nach Anspruch 1, wobei das Abfragen durch den ersten Server, ob es in dem Netzwerk einen zweiten Server gibt, wobei der zweite Server ein Proxy-Server ist, der CoAP in HTTP konvertiert, Folgendes umfasst:
Senden eines Request Frame, um abzufragen, ob ein Border Gateway oder ein Border Router eine Proxy-Konvertierungsfunktion aufweist, und Bestimmen, dass es den zweiten Server gibt, wenn ein entsprechender Acknowledgement Frame empfangen wird; und
Bestimmen, dass es den zweiten Server nicht gibt, wenn innerhalb eines begrenzten Zeitraums kein Acknowledgement Frame empfangen wird.

4. Verfahren nach Anspruch 3, wobei das Verfahren, wenn innerhalb des begrenzten Zeitraums kein Acknowledgement Frame empfangen wird, des Weiteren Folgendes umfasst:
Verwerfen der erstellten UA-CoAP-Datennachricht durch den ersten Server und Übermitteln der Datennachricht nach Art eines UA-TCP.

5. Verfahren nach Anspruch 1, wobei das Verfahren des Weiteren Folgendes umfasst:
wenn der zweite Server einen von dem ersten Server gesendeten Anfrage-Request-Frame empfängt, Antworten mit einem Acknowledgement Frame an den ersten Server durch den zweiten Server, damit der erste Server die erstellte UA-CoAP-Datennachricht verwirft und die Datennachricht nach Art eines UA-TCP übermittelt, wenn der erste Server nach mehrmaligem Senden des Anfrage-Request-Frame innerhalb eines begrenzten Zeitraums keine Antwort in Form des Acknowledgement Frame erhält.

6. Verfahren nach Anspruch 1, wobei
der zweite Proxy-Server auf einem Border Gateway oder einem Border Router läuft und eine Konvertierungsfunktion zwischen einer standardmäßigen CoAP-Datennachricht und einer standardmäßigen HTTP-Datennachricht unterstützt.

## Revendications

1. Procédé de transmission d'un message OPC UA par CoAP, le procédé comprenant les étapes consistant à :
encapsuler, par un premier serveur, des données en utilisant un modèle informationnel OPC UA, encoder les données encapsulées en format binaire ou en format XML afin d'obtenir un message de données OPC UA et encapsuler le message de données OPC UA dans des données utiles d'un message CoAP afin d'obtenir un message de données UA-CoAP, le premier serveur étant un serveur OPC UA à base de CoAP;
le procédé étant **caractérisé par** les étapes consistant à :
interroger, par le premier serveur, s'il y a un deuxième serveur proxy dans un réseau ;
s'il y a le deuxième serveur proxy, envoyer, par le premier serveur, le message de données UA-CoAP au deuxième serveur proxy situé à une limite de réseau d'un appareil de terrain industriel sous-jacent ;
convertir, par le deuxième serveur proxy après avoir reçu le message de données UA-CoAP, le CoAP en HTTP, des informations OPC UA n'étant pas changées, le deuxième serveur étant un serveur proxy qui convertit le CoAP en HTTP ;
former, par le deuxième serveur proxy après la conversion, un message de données HTTP contenant les informations OPC UA originales et envoyer directement le message de données à un client OPC UA standard dans un réseau externe pour l'analyse de données subséquente ; et
s'il n'y a aucun deuxième serveur proxy, rejeter, par le premier serveur, le message de données UA-CoAP et exécuter la transmission directe en utilisant le TCP.

2. Procédé selon la revendication 1, dans lequel l'étape consistant à encapsuler, par le premier serveur, les données en utilisant le modèle informationnel OPC UA, encoder les données encapsulées en format binaire ou en format XML et encapsuler le message de données OPC UA dans les données utiles du message CoAP comprend l'étape consistant à :
reconstruire, par le premier serveur, un en-tête lors de la construction du message de données, l'en-tête comprenant une fonction de type de message, une information de type d'encodage OPC UA, une fonction d'option CoAP additionnelle et une longueur du message de données.

3. Procédé selon la revendication 1, dans lequel l'étape consistant à interroger, par le premier serveur, s'il y a un deuxième serveur dans le réseau, le deuxième serveur étant un serveur proxy qui convertit le CoAP en HTTP, comprend les étapes consistant à :
envoyer une trame de demande afin d'interroger si une passerelle frontière ou un routeur de frontière a une fonction de conversion proxy et déterminer que le deuxième serveur existe si une trame d'accusé correspondante est reçue ; et
déterminer que le deuxième serveur n'existe pas si aucune trame d'accusé n'est reçue pendant une période de temps limitée.

4. Procédé selon la revendication 3, dans lequel, si aucune trame d'accusé n'est reçue pendant la période de temps limitée, le procédé comprend en outre l'étape consistant à :
rejeter, par le premier serveur, le message de données UA-CoAP construit et transmettre le message de données à la façon d'UA-TCP.

5. Procédé selon la revendication 1, dans lequel le procédé comprend en outre l'étape consistant à :
si le deuxième serveur reçoit une trame de demande d'interrogation envoyée par le premier serveur, répondre, par le deuxième serveur, avec une trame d'accusé au premier serveur de sorte que le premier serveur rejette le message de données UA-CoAP construit et transmette le message de données à la façon d'UA-TCP si le premier serveur ne reçoit pas une réponse de la trame d'accusé après avoir envoyé la trame de demande d'interrogation plusieurs fois pendant une période de temps limitée.

6. Procédé selon la revendication 1, dans lequel
le deuxième serveur proxy fonctionne sur une passerelle frontière ou un routeur de frontière et supporte une fonction de conversion entre un message de données CoAP standard et un message de données HTTP standard.
